# EUROPEAN PATENT SPECIFICATION

(11) **EP 2 300 121 B1**
(45) Date of publication and mention of the grant of the patent: **27.07.2016**
(21) Application number: 09750229.8
(22) Date of filing: 14.05.2009
(51) Int. Cl.: B01D 29/66

(54) **METHOD FOR OPERATING A FILTER APPARATUS AND FILTER APPARATUS**
VERFAHREN ZUM BETRIEB EINER FILTERVORRICHTUNG UND FILTERVORRICHTUNG
PROCÉDÉ D'UTILISATION D'UN APPAREIL DE FILTRATION ET APPAREIL DE FILTRATION

(30) Priority: 21.05.2008 DE 102008024583
(43) Date of publication of application: 30.03.2011
(73) Proprietor: Boll & Kirch Filterbau GmbH, 50170 Kerpen (DE)
(72) Inventor: CARTARIUS, Karsten, 52391 Vettweiß (DE)
(74) Representative: Althaus, Arndt
(86) International application number: PCT/IB2009/052001
(87) International publication number: WO 2009/141772

(56) References cited:
- WO-A-03/031019
- DE-A1- 10 151 864
- DE-A1- 19 752 090

## Description

The invention relates to a method for operating a filter apparatus for the filtration of liquids, in particular of water or drinking water, but also of other fluids which, in particular, could be contaminated with solid particles, with a filter apparatus which has a housing, which is provided with an inlet for unfiltered liquid and with a filtrate outlet, openable and closable by means of an outlet valve, for filtered liquid, and which has a filter means, arranged in the housing in the flow path of the liquid between the inlet and filtrate outlet, and a dirt discharge, particles, such as, in particular, solid particles, being filtered out from the liquid by the filter means, which solid particles can be discharged from the housing via a dirt discharge openable and closable by means of a discharge valve. The invention also relates to a filter apparatus for the filtration of liquids, in particular of water or drinking water, with a housing with an inlet for unfiltered liquid and a filtrate outlet for filtered liquid or filtrate, with a filter means which is arranged in the housing in the flow path of the liquid between the inlet and the filtrate outlet for filtering out particles from the liquid on a dirty side, and with a dirt discharge, via which the particles filtered out on the dirty side can be discharged from the housing.

The invention is based on a method and a filter apparatus, as known from DE 101 51 864 B4. It is basically known that a filter means within a filter apparatus gradually becomes clogged with continuing filter use, and therefore, for continuous operation, measures have to be taken in order to prolong the, in particular, maintenance-free service life of a filter apparatus. DE 101 51 864 proposes various combinations of several backwashing or cleaning methods for cleaning or backwashing the filter means opposite to the filtering direction, there being proposed, inter alia the injection of compressed air or gas, the circulation of the filter contents by means of pumps or diaphragm units on the filtrate side, the use of an ultrasonic generator or an ultrasonic probe and the provision of a chamber capable of being shut off as a sedimentation chamber or vacuum chamber, in order to release deposits from the filter wall of the filter means.

Another group of filter apparatuses is in the form of what are known as backwash filters, in which, during filtration operation, the flow passes from inside outwards through a multiplicity of filter candles which are mostly arranged on a pitch circle and to which at least one rotatable backwash member is assigned, in order successively to connect the ends of individual filter candles to a dirt discharge via the backwash member. With the dirt discharge open, the respective filter candle can then be cleaned off opposite to the filtering direction, consequently in countercurrent. Since, in the backwash filters operating with backwash members, there is a higher cleaning action near the filter ends acted on with the backwash member than in the filter-candle centre, it has also been proposed to install stationary or moveable installation elements in the filter-candle centre, with the result that a cross-current cleaning flow can be superposed on the countercurrent cleaning flow. The main field of use of the backwash filters with washing members is the purification of lubricating oil and fuel in engines or machines, and a drive for rotating the backwash member or backwash members is basically necessary.

DE 197 52 090 discloses a filtering apparatus according to the preamble of claim 6. The filtering apparatus comprises a cylindrical housing with an inlet at the upper end of the cylindrical housing, a filtrate outlet in the closing lid for the housing and a discharge outlet in the bottom of the housing. The inlet, the outlet and the discharge opening are associated with a valve which are activated such that the inlet valve and the outlet valve are pulsewise closed while the discharge valve opens. By closing of the valves both in the inlet and in the outlet, a hydrodynamic effect within the filtering apparatus is created for cleaning the filtering means. The valves are either arranged on a common shaft or are activated by a control unit.

WO 03/031019 A1 discloses a filtering device to filter or concentrate solids from fluids having an inlet and an outlet and a passage defined therebetween, at least a portion of which is fluid permeable. By an outlet valve, the pressure and fluid velocities within the housing are varied.

The object of the invention is to provide a method for operating a filtering apparatus and a filtering apparatus which, in particular, are suitable for the filtration of water or drinking water with a high throughfow rate of, for example, more than 10 m³/h and with correspondingly high flow velocities of the liquid and which also make it possible to have long service lives along with a low outlay in maintenance terms.

This and further objects are achieved according to the invention, in the method, in that the discharge valve and the outlet valve are actuated in common, in order, by the opening of the discharge valve and the simultaneous complete or at least partial closing of the outlet valve, to generate in the filtered liquid a pressure pulse, via which particles adhering to the surface of the filter means can be released and are then discharged from the housing interior via the discharge valve. Since a combined switching operation of the discharge valve and outlet valve is required for only a short time in order to generate the cleaning pulse, the method according to the invention can operate with a very short, mostly only a few seconds, in particular only about 2 to 3 seconds, long interruption or throttling of the throughflow rate, the cleaning pulse being generated in the already filtered liquid, consequently on the clean side, and then passing from the clean side to the dirty side through the filter means in countercurrent to the filtering direction, in order to release particles adhering to the filter means.

In the particularly preferred embodiment, the discharge valve and the outlet valve are motionally coupled to one another mechanically, and both are actuated by means of a common drive, with the result that even extremely short switching intervals between the coupled closing and opening of the outlet valve or of the discharge valve are achieved at a low outlay in switching terms. It is particularly advantageous if the common switching of the discharge valve and outlet valve takes place with the inlet being at least partially, preferably completely open, since the filter means is then not only cleaned by the pressure pulse generated in countercurrent, but at the same time a cross flow arises on the dirty side of the filter means on account of the liquid flowing out directly along the surface of the filter means to the dirt discharge, the said cross flow assisting the release of the particles. According to an advantageous embodiment, the common switching may cause a single variation in the switching position of a shut-off member of the outlet valve and of a shut-off member of the discharge valve, in which case the shut-off members may consist, in particular, of valve balls with a through-bore. Alternatively, during switching, the switching position of the two shut-off members coupled to one another may be varied several times directly in succession, in order to give rise on the clean side to a pulsation with a plurality of pressure pulses in the filtrate. Whether one or more pressure pulses achieve a higher cleaning action depends particularly on the switching duration for changing the switching position of the shut-off members and on the flow velocity of the liquid to be filtered between the inlet and filtrate outlet.

According to a further advantageous embodiment, the fluid may be irradiated permanently or intermittently by means of a light source, in particular UV light source, in order suitably to kill by means of the UV light, in the liquid and on the surface of the filter means, bacteria and microorganisms which may be located, in particular, in water. If a light source or UV light source is used, it is particularly advantageous if, during irradiation, air, in particular small air bubbles, regulated in terms of quantity and/or of air-bubble size, is injected into a filter-candle inner space of a filter candle which has the filter means as a circumferential wall and against which the liquid to be filtered flows from outside. The interaction of the small air bubbles with the UV light may form radicals, such as, for example, ozone, which give rise to an additional cleaning-off action on the filter means. Moreover, the small gas or air bubbles lead to a reflection or deflection and distribution of the UV light, so that the duration of action, intensity of action and reliability of the irradiation of the liquid are improved. Alternatively or additionally, if appropriate only during the opening of the discharge valve, but even permanently, air, preferably compressed air, or gas can be injected into the filter-candle inner space, thus generating in the filter-candle inner space a turbulent air/ water mixture inconstant in time, which, particularly with the dirt discharge valve open, generates opposite to the filtering direction a turbulent counter flow inconstant in time which can further improve the release of the particles adhering to the filter means by virtue of the combination of countercurrent and cross current together with the cleaning pulse.

In a filter apparatus according to the invention, the above object is achieved in that the outlet valve and the discharge valve can be actuated by a common drive and are coupled in such a way that the discharge valve opens the dirt discharge only when the outlet valve has at least partially shut off the filtrate outlet. As a result of the said coupling of the switching operations of the outlet valve and of the discharge valve, a superposition of a countercurrent wash from the filtrate side to the dirty side and of a cross flow on the dirty side, essentially at the full flow velocity of the liquid to be filtered is achieved, with the result that it is possible to release the particles and therefore keep the filter means clean, even for a long operating time, at relatively low outlay and almost without any interruption in the filtering operation. It is particularly advantageous if the discharge valve and the outlet valve have in each case a valve ball with a through-bore as a shut-off member, in which case preferably the two valve balls can be connected fixedly in terms of rotation to one another via an intermediate shaft. Switching valves with valve balls can be actuated extremely quickly and sealingly closed with high reliability, and, even when they are used in water, particularly when the valve balls consist of high-grade steel, there are no corrosion problems. With a mechanical coupling of the two valve balls, a single drive is sufficient to achieve the coupled movement of the two valves, and a rapid switching movement can be achieved, in particular, by means of a pneumatic motor, but also by means of electric motors or other motors, and, if motors are used, the entire switching operation can be controlled automatically from a switchgear or a central switchboard.

In the particularly preferred embodiment, the filter means forms the circumferential wall of a filter candle, the candle inner space of which is connected to the filtrate outlet. A corresponding embodiment of the filter means makes it possible, even with a small construction space, to have a relatively large filter surface and, to that extent, in the case of a small construction space of the filter, also sufficiently high throughflow rates. It is particularly advantageous if an annular space is formed, around the circumferential wall of the filter candle, in the housing, the flow path for the liquid to be purified issuing, downstream of the inlet, into this annular space tangentially. The tangential inflow of the annular space, which preferably extends with a uniform cross section parallel to the longitudinal axis of the filter candle, with the liquid to be filtered causes a preseparation, since larger particles are set in circular motion due to the tangential inflow and as a consequence of velocity and of gravity are transported or entrained to the outlet-side end of the housing, without being filtered out at the filter means and clogging the later. The tangential inflow of the annular space constitutes a kind of cyclone separator or preseparator in order to separate particles, which are markedly larger than the mesh width of the filter means used, out of the fluid, as far as possible without the action of the filter means. In the particularly preferred embodiment, vertically standing filter candles are used, in which the inlet preferably issues at the upper end into the annular space, while the dirt discharge is connected at the other, preferably lower end of the annular space. In order to prolong the time interval between two switching operations for the combined switching of the outlet valve and discharge valve, the dirt discharge may be preceded by a collecting chamber for filtered-out particles or for particles transported as a consequence of gravity to the bottom of the annular space.

According to a particularly expedient embodiment, at least one light source, in particular a UV light source, is arranged in the filter apparatus, in order via the radiated light, in particular light with a wavelength in the UV range, to generate in the water, or in a cleaning gas additionally fed in, radicals, such as ozone or the like, which assist the cleaning action. In a particularly expedient embodiment, the UV light source is arranged in the filter-candle inner space, since the solid particles, but also microorganisms have already been filtered out from the fluid in the filter-candle inner space, and there is therefore no risk that the surface of the UV light source is contaminated by these. In order to achieve uniform irradiation of the surface of the filter means and of the liquid, preferably a plurality of light sources, for example 3 to 5 UV light bars, are arranged in the filter-candle inner space. For additional manual maintenance, it is advantageous, further, if the housing is closed at the top by means of a cover which forms the holding device for all the light sources arranged in the filter-candle inner space. In the case of a plurality of light sources, it may be advantageous to arrange between these perforated sheet-metal strips, for example perforated sheet-metal strips converging in the form of a star at the mid-axis of the filter candle, in order to allow a reliable removal of all the light sources. Alternatively, or additionally, supply devices for gas, air and/or cleaning agent may be arranged at the upper and/or lower end of the filter candle for acting upon the filter-candle inner space with air or gas, in particular with air bubbles or gas bubbles. This supply may take place, in particular, via bubblers which convert the gas stream or air stream supplied into small air bubbles of preferably adjustable diameter. If the gas supply is to take place only during the coupled switching operation of the discharge valve and outlet valve, it is particularly advantageous if a shut-off member, in particular a switching ball, for opening or closing the air-supply or gas-supply device is coupled mechanically to the shut-off members for the discharge valve and the outlet valve or their drive. The gas bubbles or air bubbles and, if appropriate, also the filter means can reflect the light radiated by the light source in order to improve the irradiation intensity. For this purpose, the filter means may be provided with a reflection coating.

Basically all types of filter means may be used in the filter apparatuses according to the invention. For water filtration and the filter apparatuses used for this purpose, particularly suitable filter candles are those consisting of slotted-screen candles with slotted screens as filter means, the mesh width of which amounts, for example, to less than 0.15 mm (150 microns), preferably to even less than 0.075 mm (75 microns), in particular to less than 0.05 mm (50 microns).

Furth er advantages and embodiments of the method and of a filter apparatus according to the invention may be gathered from the following description of an exemplary embodiment shown diagrammatically in the drawing in which:
**Fig. 1** shows a longitudinal section through a filter apparatus according to the invention;
**Fig. 2** shows a view of a detail of the upper region of the filter apparatus according to the invention from Fig. 1, partially cut away;
**Fig. 3** shows diagrammatically a sectional view along III - III in Fig. 2;
**Fig. 4** shows diagrammatically a horizontal section through the lower end of the filter apparatus from Fig. 1, partially cut away; and
**Fig. 5** shows a view of a detail of the lower end of a filter apparatus according to the invention, partially cut away.

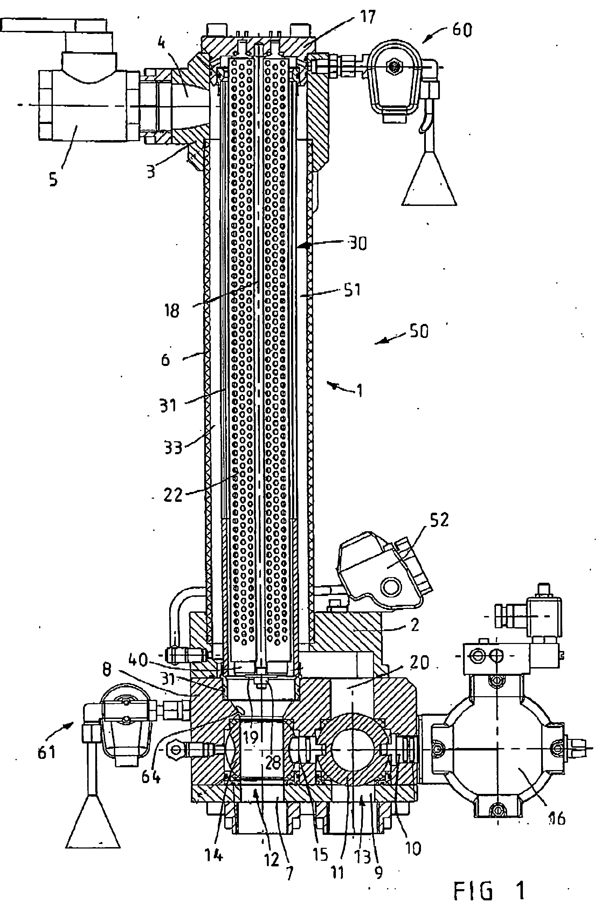

In Fig. 1, reference symbol 50 designates as a whole a filter apparatus according to the invention, the main area of use of which is the filtration of water, in particular drinking water. The filter apparatus 50 has a housing, formed here from a plurality of components connected releaseably to one another and designated as a whole by reference symbol 1, with a lower housing block 2 and with an upper housing block 3 which are connected via a cylindrical and relatively long housing wall 6. The two housing blocks 2, 3 are connected to one another via suitable seals and screw or welded connections, not illustrated, to the housing wall 6 so as to form an elongate filter apparatus 50. In the upper housing block 3, an inlet 4 is formed, via which liquid to be filtered flows into the filter apparatus 50. The inlet 4 may be partially or completely shut off selectively by means of an inlet valve 5, if, for example, the filter apparatus 50 is arranged in a battery of several corresponding filter apparatuses and is to be removed temporarily from the filter circuit. To the underside of the lower housing block 2, a valve block 8 is screwed, which has a filtrate outlet 7 for the filtered liquid and in a parallel bore, here on the right next to the filtrate outlet 7, a dirt discharge 9. For filtering out particles, in particular solid particles with an average particle size of, for example, more than 50 microns, there is arranged in the housing inner space 51 of the housing 1 a cylindrical filter candle 30 which consists in the exemplary embodiment shown of a slotted-screen candle and which extends essentially over the entire height of the filter apparatus 50 and is anchored, sealed off, in the valve block 8 via a lower socket 31 in a stepped bore which forms part of the filtrate outlet 7. The cylindrical circumferential wall of the filter candle 30 is formed over a large part of the length of the filter candle 30 by a filter means which is illustrated diagrammatically in highly simplified form in Fig. 1 as a longitudinal slot and as a whole is given reference symbol 31. A liquid to be filtered, which enters the housing inner space 51 via the inlet 4, has to flow along the flow path through the filter means 31 before it can emerge as filtrate from the filtrate outlet 7. The filter apparatus 50 according to the invention may in principle be provided with any type of filter means, in particular a filter means designed as a filter candle and having a suitable mesh width, of, for example, less than 50 microns, the most diverse possible embodiments of filter means being known to a person skilled in the art, and therefore a more detailed description of the filter means 31 used not being given here.

It is clearly evident even from Fig. 1 that the filtrate outlet 7 in the valve block 8 is assigned an outlet valve 12 and that the dirt discharge 9 in the valve block 8 is assigned a discharge valve 13, the two valves 12, 13 in each case having as a shut-off member a valve ball 14 for the outlet valve 12 and a valve ball 11 for the discharge valve 13, which valve balls are provided in each case with a through-bore, through which liquid can pass and flow to the filtrate outlet 7 or dirt discharge 9 in the case of one specific switching position only. The valve balls 14 of the filtrate outlet valve 12 and 11 of the dirt discharge valve 13 are seated with suitable seals in reception cages in order to open the throughflow in one switching position and to shut it off in another closing position. Fig. 1 shows in this case the valve ball 14 of the filtrate outlet 7 in the opening position and the valve ball 11 for the dirt discharge 9 in the closing position.

According to a first aspect of the invention, the two valve balls 11, 14 are coupled fixedly in terms of rotation to one another via an intermediate shaft 15. Connected to the valve ball 11 of the discharge valve 13 is the output shaft 10 of a drive 16 which is flanged laterally to the valve block 8 and could consist, for example, of a pneumatic drive operating extremely quickly, but also a hydraulic or electric drive. By means of a switching movement of the drive and a rotation of the output shaft 10 through 90°, the discharge valve 13 and the filtrate outlet valve 12 can be actuated simultaneously in such a way that a closing of the outlet valve 12 takes place concomitantly with an opening of the dirt discharge valve 9, or vice versa. Depending on the size of the though-bore in the valve balls 11, 14, both valve balls having the same bore diameter in the exemplary embodiment shown, a setting such that the filtrate outlet 7 is first as far as possible closed before the dirt discharge 9 opens can be made.

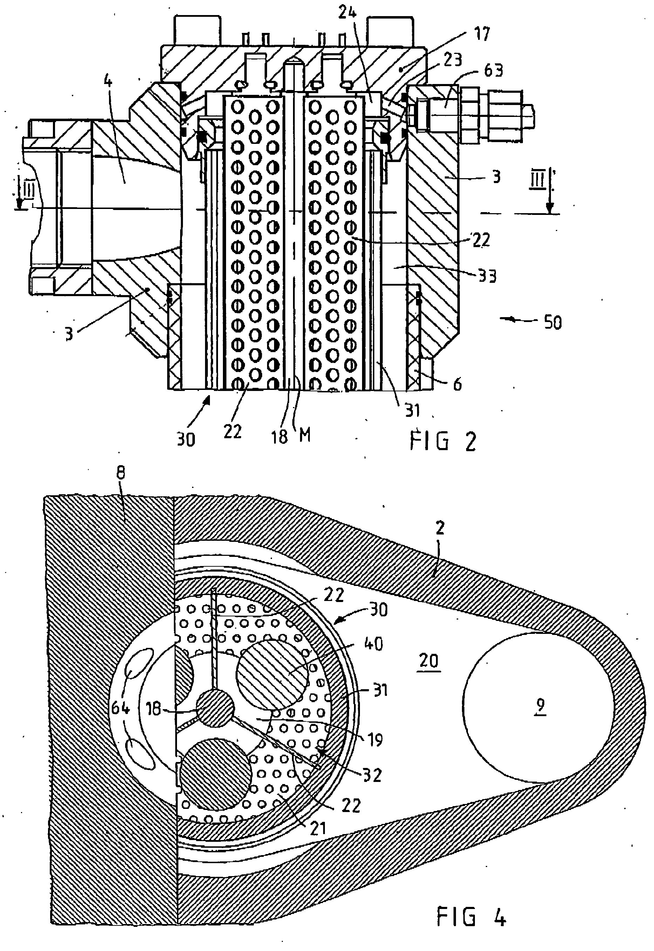

When a filter apparatus 50 is operating continuously, the water to be filtered flows at a throughflow rate of, for example, up to 15 m³/h through the housing inner space 51, the water flowing via the inlet 4 preferably tangentially, as will also be explained, into an annular space 33 which is formed between the circumferential wall, formed by the filter means 31, of the filter candle 30 and the inside of the housing wall 6, and then, after it passes through the filter means 31 with a filtrate outlet 7 open, emerging via the latter as filtered water, consequently as filtrate. As a result of the permanent filtering operation, particles are retained on the outside of the filter candle 30 through which the flow passes from the outside inwards. Most particles retained on the surface of the filter means on the dirty side will gradually sink to the bottom of the filter inner space 51 or annular space 33 as a consequence of gravity and due to the flow direction of the liquid also as a consequence of the flow. On the underside of the lower housing block 2, a collecting chamber 20 consisting of an oval clearance is formed as a dead space and precedes the dirt discharge 9, in order temporarily to collect there the particles which have been filtered out. If, then, it is detected automatically or via a differential-pressure indicator 52 that the throughflow rate of the filter apparatus 50 is falling because of excessive contamination of the filter means 31, the switching positions of the valve balls 11, 14 are varied in a coupled manner by means of the drive 16 in such a way that, preferably with the inlet valve 5 continuing to be completely open, a brief interruption, lasting for between about 2 and 4 seconds, in the liquid throughflow through the filtrate outlet 7 occurs, and, instead, the dirt discharge 9 is briefly opened. Since the flow velocity of the water to be filtered in the filter apparatus 50 preferably amounts to about 2 - 4 m/s and is consequently relatively high, the brief shut-off of the filtrate outlet 7 or throttling of the throughflow rate gives rise in the filter-candle inner space (32, Fig. 4) of the filter candle 30 to a pressure pulse, by means of which a release, in particular blasting-off, of those particles which have remained adhering to the surface of the filter means on the dirty side, that is to say, here, on the outer surface, is achieved opposite to the filtering direction. Simultaneously, since the dirt discharge 9 is opened at the same time as the closing movement of the filtrate outlet 7, a flow with a high flow velocity occurs in the annular space 33, parallel to the axis of the filter candle 30, which cleans off the surface of the filter means 31 on its dirty side as a cross flow and assists the release effect and the transporting away of the particles. Owing to the presence of the prechamber 20 upstream of the dirt discharge valve 13, an additional delay can arise between the return of the pressure pulse or cleaning pulse from the closed filtrate outlet through the filter candle 30 to the inlet 4 and the generation of a cross flow parallel to the filter axis.

Since the filter apparatus 50 according to the invention is provided, in particular, for the purification of water or drinking water, and, in the case of drinking water, it is necessary to ensure that no bacteria or germs are also transferred to the water by the filter apparatus, wherein the problem of the formation of germs and bacteria may increase considerably with a smaller mesh width of the filter means 31, in the exemplary embodiment shown there are arranged in the filter-candle inner space 32 of the filter candle 30 three UV light tubes 40, by means of which the fluid and the filter means 31 are irradiated with light of a suitable wavelength, in particular UV light, permanently during the entire filtering operation, but, if appropriate, also for only a short period of time, for example during the switching of the valves 12, 13, in order thereby to kill bacteria and germs reliably. The arrangement of the UV light sources 40 within the filter apparatus 50 is explained with additional reference to Fig. 2 to 4.

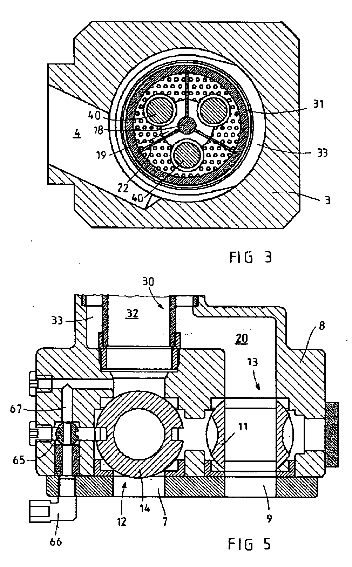

In particular, the sectional views in Fig. 3 through the upper housing block 3 and in Fig. 4 partially through the lower housing block 2 or the valve block 8 reveal the three light tubes 40, arranged in each case so as to be offset at 120° with respect to one another, in the filter-candle inner space 32 of the filter candle 30. The upper ends of all three light tubes 40 are anchored in a cover 17 which is placed releasably from above onto the upper housing block 3 and at the same time has the electrical connections for the light tubes 40. Arranged on the mid-axis M of the housing wall 6 or of the entire filter apparatus 50 is a rod 18 which is provided at both ends with a thread and is screwed into the housing cover 17 at the top centrally between the three light tubes 40 and onto the lower free portion of which is screwed a nut 28 which via an intermediate washer 19 pre-stresses the lower free ends of the light tubes 40 towards the cover 17. As is evident particularly clearly from Fig. 2 to 4, overall three sheet-metal strips 22 consisting of perforated sheet metal or the like are welded to the rod 18 in such a way that the individual sheet-metal strips 22 run radially outwards and, together with the rod 18, form a separating body of star-shape cross section with three separate chambers for a protected reception of the three light tubes 40 within the filter candle 30. The sheet-metal strips 22 may be anchored on the outside of the filter means 31, so that the filter candle 30, together with the light tubes 40 and the cover 17, can be removed from the filter apparatus 50, or they lie at a distance from the filter means, so that the light tubes can be removed together with the cover part 17 which forms a holding device for the light tubes 40, while the filter candle 30 remains in position. The action of the UV light of the light tubes 40 is particularly high if the filter means 31 is provided with a coating (not shown) reflecting the light or the UV light. By the water being irradiated with UV light, radicals or the like may be formed which are highly volatile, but at the same time detach and/or kill germs and bacteria on the surface of the filter means 31 and in the liquid.

Below the light tubes 40, above the filtrate outlet valve 12, a screen plate 21 is arranged, which, if one of the light tubes breaks, retains the fragments in the filter apparatus. The arrangement of the light tubes 40 in the filter-candle inner space 32 of the filter candle 30 constitutes a first additional measure which can be selectively provided for cleaning off the filter means 31 if the pressure pulse occurring during the simultaneous switching of the outlet and discharge valves 12, 13 does not bring about a complete release of the particles.

To improve the cleaning action by means of the light source, the filter apparatus 50 according to the invention is provided in the exemplary embodiment shown, both in the region of the upper housing block 3 and in the region of the valve block 8, with an upper supply device 60 and with a separate lower supply device 61 for air, gas and/or cleaning fluid. The upper supply device 60 is screwed via a screw connection 63 to the upper end of the upper housing block 3, and the lower supply device 61 is screwed, just above the reception seat for the valve ball 14, to the housing block 8 via a screw connection. A gas, in particular air, can be fed into the filter-candle inner space 32 via the two supply devices 60, 61. For this purpose, as may be gathered clearly from Fig. 2, there is provided in the cover 17, in alignment in the mounted state with the screw connection 63 in the housing block 2 for the upper supply device 60, at least one transverse bore 23 which allows inflowing gas to flow through the cover 17 directly over into the filter-candle inner space 32 of the filter candle 30. Instead of a plurality of transverse bores 23 which require an exactly oriented mounting of the cover part 17, there may also be formed on the cover a peripheral annular space which issues into the end region of the filter-candle inner space 32, if appropriate, via only one transverse bore 23. The supply device connected at the screw connection 63 may be provided with a bubbler or a suitable nozzle, so that the air supplied or the gas supplied passes only as small air bubbles into the inner space, normally filled completely with the liquid to be purified, of the filter apparatus 50. The air bubbles or the gas stream are or is entrained in the form of small bubbles by the fluid entering the inlet 4 at high velocity, this giving rise in the filter-candle inner space 32 to a turbulent air/water mixture which can exert a cleaning action on the filter means not only in the case of the pressure pulse built up briefly as a result of the closing of the filtrate outlet, but, where appropriate, also permanently. In addition, the UV light can generate within the gas or the small gas bubbles radicals or other cleavage products which effectively kill germs on the surface of the filter means 31. Moreover, the gas bubbles can reflect the UV light and thereby distribute it more effectively. The supply of air or gas may take place selectively only via the upper supply device 60, only via a lower supply device 61 or else simultaneously via both supply devices 60, 61, and the gas stream may be supplied permanently, or else only briefly when the pressure pulse is to be built up. The same supply devices 60, 61 or further supply devices mounted, offset, on the circumference may also be utilized to build up an additional cleaning pulse by means of a compressed-air surge, as is known per se in the backwashing of filter apparatuses. Furthermore, the further or the two supply devices 60, 61 shown may also be provided with additional connections (not illustrated) for cleaning liquids or washing solutions, in order to fill the entire housing inner space 51 of the filter apparatus 50 with a washing liquid, such as, for example, acetic acid or the like. This makes it possible to clean the entire filter apparatus 50, and, in particular, the filter means 31 of the filter candle 30 by means of suitable cleaning liquids, without the filter candle 30 having to be demounted. A cleaning possibility of this kind is also designated as CIP cleaning (clean in place). The supply devices may, in particular, comprise solenoid valves for the selective, if appropriate regulated interruption in the air supply or gas supply.

The air supply of the air supplied via the lower supply device 61 takes place via one or more mouth orifices 64 in the outlet region of the filtrate outlet 7 above the outlet valve 12. As also shown incidentally in Fig. 4, corresponding air outlet orifices 64 may be arranged, distributed on the circumference, so that, in the filter-candle inner space 32, each reception chamber for one of the light tubes 40 and/or the entire inner surface of the filter means 31 can be covered uniformly with a gas stream of, for example, small rising air bubbles.

An embodiment, particularly simple with regard to the outlay in terms of switching, for combining the air supply with the switching of the valve balls 11 of the discharge valve 13 or of the valve balls 14 of the outlet valve 12 is shown in Fig. 5, in which not only the two valve balls 11, 14 are coupled mechanically via an intermediate shaft (not shown here), but, moreover, a third switching ball 65 is also motionally coupled to the valve ball 14 for the filtrate outlet, so that the supply of air into the filter-candle inner space 32 of the filter candle 30 can take place actually only when the switching position of the two valves 12, 13 has been actuated by the drive. Contrary to the previous exemplary embodiment, here, the compressed-air supply takes place, if appropriate, only via a single compressed-air connection 66. This may issue, downstream of the switching ball 65, via one or more branch ducts 67 not only at the bottom into the filter-candle inner space 32, but also at the top into the filter-candle inner space 32, if, for example, a line (not shown) connecting the valve block 8 to the upper housing block is provided. Alternatively, the switching operation of the valve ball 65 could, of course, also be decoupled from the switching operation of the other two valve balls, so that air or gas can be supplied at any desired time points.

Fig. 3 illustrates particularly clearly the tangential inflow of the annular space 33 in the flow path of the liquid to be purified, downstream of the inlet 4, in the upper housing block 3. Since the entire water flowing in enters the annular space 33 tangentially at high velocity, in particular, heavier or larger particles are first not filtered out at all by the filter means 31, but, instead, these particles acquire, due to the flow velocity and to gravity, a force vector which, in principle, keeps them in motion as far as the bottom of the filter apparatus 50, consequently as far as the collecting space (20, Fig. 4), without these particles tending to settle at all on the outer wall of the filter means 31. The filter means 31 can therefore, for example, even extend only over about 2/3 to 4/5 of the length of the filter candle 30, and the lower portion of the filter-candle wall is closed, as shown. This at the same time increases the necessary flow length for the filtrate past the light tubes 40, in order to ensure the action of light over a sufficiently long path and to kill germs in the filtrate.

Numerous modifications which are to come within the scope of protection of the accompanying claims may be gathered from the preceding description by a person skilled in the art. It will be appreciated that the action of gas or compressed air could be dispensed with completely and/or the injection of compressed air could take place approximately as desired, if appropriate even below the inlet, in order to achieve a better intermixing of the air bubbles, on the one hand, and of the water, on the other hand. To achieve a pressure pulse for cleaning the filter wall, a once-only closing of the filtrate outlet and a simultaneous opening of the dirt discharge valve may be sufficient. However, the two valve balls may also be switched several times shortly in succession by means of quick-action switching units, or they are rotated continuously in one direction in order to achieve pulsation in the liquid. By the switching speed or rotational speed of the valve balls being set, the cleaning effect of the pressure pulses can be improved.

## Claims

1. Method for operating a filter apparatus for the filtration of liquids, in particular of water or drinking water, the filtering apparatus comprising a housing (1) having an inlet (4) for unfiltered liquid and a filtrate outlet (7) for filtered liquid, the outlet being openable and closable by means of an outlet valve (12), a filter means (31) arranged in the housing in the flow path of the liquid between the inlet and filtrate outlet, and a dirt discharge (9), particles being filtered out from the liquid by the filter means (31) and being capable of being discharged from the housing via the dirt discharge openable and closable by means of a discharge valve (13), the discharge valve (13) and the outlet valve (12) are actuated in common, in order, by the opening of the discharge valve (13) and the simultaneous at least partial closing of the outlet valve (12), to generate a pressure pulse in the filtered liquid for cleaning the filter means, **characterized in that** the common switching of the discharge valve and outlet valve (13, 12) takes place with the inlet (4) being at least partially open, wherein air, in particular as small air bubbles, or gas is injected, regulated, into a filter-candle inner space (32) of a filter candle (30), the circumferential wall of which is formed by the filter means (31) and the candle inner space (32) of which is connected to the filtrate outlet.

2. Method according to Claim 1, **characterized in that** the discharge valve (13) and the outlet valve (12) are coupled to one another mechanically and are actuated by means of a common drive (16).

3. Method according to Claim 1 or 2, **characterized in that** the common switching of the discharge valve and outlet valve (13, 12) takes place with the inlet (4) being completely open.

4. Method according to one of Claims 1 to 3, **characterized in that** the common switching causes a single variation in the switching position of a shut-off member of the outlet valve (12) and of a shut-off member of the discharge valve (13), or **in that**, during switching, their switching position is varied several times directly in succession, in order to give rise to a pulsation with a plurality of pressure pulses in the liquid.

5. Method according to one of Claims 1 to 4, **characterized in that**, during the opening of the discharge valve (13) and/or permanently, air, preferably compressed air, or gas is injected into a filter-candle inner space (32), connected to the filtrate outlet, of a filter candle (30), the circumferential wall of which is formed by the filter means (31), in order to generate in the filter-candle inner space a turbulent air/water mixture inconstant in time which cleans the filter means opposite to the filtering direction.

6. Filter apparatus for the filtration of liquids, in particular of water or drinking water, with a housing (1) having an inlet (4) for unfiltered liquid and a filtrate outlet (7) for filtered liquid, with a filter means (31) being arranged in the housing (1) in the flow path of the liquid between the inlet and the filtrate outlet for filtering out particles from the liquid on a dirty side, and with a dirt discharge (9), via which the particles filtered out on the dirty side can be discharged from the housing, the filtrate outlet (7) being assigned an outlet valve (12) and the dirt discharge (9) being assigned a discharge valve (13), wherein the outlet valve (12) and the discharge valve (13) can be actuated by a common drive (16), **characterized in that** the outlet valve (12) and the discharge valve (13) are coupled mechanically in such a way that the discharge valve (13) opens the dirt discharge only when the outlet valve (12), while the inlet (4) being at least partially open, has at least partially shut off the filtrate outlet (7), and that the filter means (31) forms the circumferential wall of a filter candle (30), the candle inner space (32) of which is connected to the filtrate outlet (7), and a gas supply device (60, 61) is arranged at the upper and/or lower end of the filter candle (30) for acting upon the filter-candle inner space (32) with air or gas, in particular with air bubbles or gas bubbles.

7. Filter apparatus according to Claim 6, **characterized in that** the discharge valve (13) and the outlet valve (12) both are having a valve ball (11, 14) with a through-bore as a shut-off member, wherein preferably the two valve balls (11, 14) being connected fixedly in terms of rotation to one another via an intermediate shaft (15).

8. Filter apparatus according to Claim 6 or 7, **characterized in that** an annular space (33) is formed, around the circumferential wall of the filter candle, in the housing, the flow path issuing, downstream of the inlet (4), into the annular space (33) tangentially.

9. Filter apparatus according to any of Claims 6 to 8, **characterized in that** the inlet (4) issues at the preferably upper end into the annular space (33), the dirt discharge (9) being connected to the other, preferably lower end of the annular space (33).

10. Filter apparatus according to any one of Claims 6 to 9, **characterized in that** the dirt discharge (9) is preceded by a collecting chamber (20) for filtered-out particles.

11. Filter apparatus according to any one of Claims 6 to 10, **characterized by** at least one light source, in particular UV light source (40).

12. Filter apparatus according to Claim 11, **characterized in that** the UV light source is arranged in the filter-candle inner space.

13. Filter apparatus according to any one of Claims 6 to 12, **characterized in that** the housing (1) is closed at the top by means of a releasable cover (17) which forms the holding device for all the light sources (40) arranged in the filter-candle inner space, preferably a plurality of light sources being provided between which perforated sheet-metal strips (22) are arranged.

14. Filter apparatus according to any one of Claims 6 to 13, **characterized in that** a shut-off member, in particular a switching ball (65), for opening or closing the air supply or gas supply is coupled mechanically to the shut-off members for the discharge valve (13) and the outlet valve (12) or their drive.

15. Filter apparatus according to any one of Claims 6 to 14, **characterized in that** the filter candles (30) consist of slotted-screen candles with a mesh width of less than 0.15 mm (150 microns), in particular of less than 0.075 mm (75 microns).

## Patentansprüche

1. Verfahren zum Betrieb einer Filtereinrichtung zur Filterung von Flüssigkeiten, insbesondere von Wasser oder Trinkwasser, die ein Gehäuse (1), das mit einem Einlass (4) für unfiltrierte Flüssigkeit und mit einem Filtratauslass (7) für filtrierte Flüssigkeit, der mittels eines Auslassventils (12) öffen- und schließbar ist, versehen ist, die ein Filtermittel (31), das im Gehäuse im Strömungsweg der Flüssigkeit zwischen Einlass und Filtratauslass angeordnet ist, und die einen Schmutzablass (9) aufweist, wobei mit dem Filtermittel (31) Partikel aus der Flüssigkeit ausgefiltert werden, die über den mit einem Ablassventil (13) öffen- und schließbaren Schmutzablass aus dem Gehäuse abgeführt werden können, wobei das Ablassventil (13) und das Auslassventil (12) gemeinsam betätigt werden, um durch Öffnen des Ablassventils (13) und simultanes, zumindest partielles Schließen des Auslassventils (12) einen Druckimpuls in der filtrierten Flüssigkeit zur Reinigung des Filtermittels zu erzeugen, **dadurch gekennzeichnet, dass** das gemeinsame Schalten von Ablass- und Auslassventil (13, 12) bei zumindest partiell geöffnetem Einlass (4) erfolgt, wobei Luft, insbesondere als Luftbläschen, oder Gas, geregelt in einen Filterkerzeninnenraum (32) einer Filterkerze (30) eingeblasen wird, deren Umfangswand von dem Filtermittel (31) gebildet wird und deren Filterkerzeninnenraum (32) an den Filtratauslass angeschlossen ist.

2. Verfahren nach Anspruch 1, **dadurch gekennzeichnet, dass** das Ablassventil (13) und das Auslassventil (12) mechanisch miteinander gekoppelt sind und mit einem gemeinsamen Antrieb (16) betätigt werden.

3. Verfahren nach Anspruch 1 oder 2, **dadurch gekennzeichnet, dass** das gemeinsame Schalten von Ablass- und Auslassventil (13, 12) bei vollständig geöffnetem Einlass (4) erfolgt.

4. Verfahren nach einem der Ansprüche 1 bis 3, **dadurch gekennzeichnet, dass** das gemeinsame Schalten eine einzige Veränderung der Schaltstellung eines Absperrorgans des Auslassventils (12) und eines Absperrorgans des Ablassventils (13) bewirkt, oder dass beim Schalten deren Schaltstellung mehrfach unmittelbar hintereinander verändert wird, um eine Pulsation mit mehreren Druckimpulsen in der Flüssigkeit zu bewirken.

5. Verfahren nach einem der Ansprüche 1 bis 4, **dadurch gekennzeichnet, dass** während des Öffnens des Ablassventils (13), und/oder permanent, Luft, vorzugsweise Druckluft, oder Gas in einen an den Filtratauslass angeschlossenen Filterkerzeninnenraum (32) einer Filterkerze (30), deren Umfangswand von dem Filtermittel (31) gebildet wird, eingeblasen wird, um im Filterkerzeninnenraum ein turbulentes, das Filtermittel entgegen der Filtrierrichtung reinigendes, zeitlich inkonstantes Luft-Wassergemisch zu erzeugen.

6. Filtereinrichtung zur Filterung von Flüssigkeiten, insbesondere von Wasser oder Trinkwasser, mit einem Gehäuse (1) mit einem Einlass (4) für unfiltrierte Flüssigkeit und einem Filtratauslass (7) für filtrierte Flüssigkeit, mit einem Filtermittel (31), das im Gehäuse (1) im Strömungsweg der Flüssigkeit zwischen Einlass und Filtratauslass zum Ausfiltern von Partikeln aus der Flüssigkeit an einer Schmutzseite angeordnet ist, und mit einem Schmutzablass (9), über den die an der Schmutzseite ausgefilterten Partikel aus dem Gehäuse abführbar sind, wobei dem Filtratauslass (7) ein Auslassventil (12) und dem Schmutzablass (9) ein Ablassventil (13) zugeordnet ist, und das Auslassventil (12) und das Ablassventil (13) von einem gemeinsamen Antrieb (16) betätigbar sind, **dadurch gekennzeichnet, dass** das Auslassventil (12) und das Ablassventil (13) derart mechanisch gekoppelt sind, dass das Ablassventil (13) den Schmutzablass erst öffnet, wenn das Auslassventil (12) den Filtratauslass (7), während der Einlass (4) zumindest teilweise geöffnet ist, zumindest teilweise abgesperrt hat, und dass das Filtermittel (31) die Umfangswand einer Filterkerze (30) bildet, deren Kerzeninnenraum (32) an den Filtratauslass (7) angeschlossen ist, und dass eine Gaszufuhreinrichtung (60, 61) am oberen und/oder unteren Ende der Filterkerze (30) zur Beaufschlagung des Filterkerzeninnenraums (32) mit Luft oder Gas, insbesondere mit Luft- oder Gasblasen, angeordnet ist.

7. Filtereinrichtung nach Anspruch 6, **dadurch gekennzeichnet, dass** das Ablassventil (13) und das Auslassventil (12) jeweils eine Ventilkugel (11, 14) mit Durchgangsbohrung als Absperrorgan aufweisen, wobei vorzugsweise beide Ventilkugeln (11, 14) über eine Zwischenwelle (15) drehfest miteinander verbunden sind.

8. Filtereinrichtung nach Anspruch 6 oder 7, **dadurch gekennzeichnet, dass** im Gehäuse, um die Umfangswand der Filterkerze herum, ein Ringraum (33) ausgebildet ist, wobei der Strömungsweg hinter dem Einlass (4) tangential in den Ringraum (33) mündet.

9. Filtereinrichtung nach einem der Ansprüche 6 bis 8, **dadurch gekennzeichnet, dass** der Einlass (4) am vorzugsweise oberen Ende in den Ringraum (33) mündet, wobei an das andere, vorzugsweise untere Ende des Ringraums (33) der Schmutzablass (9) angeschlossen ist.

10. Filtereinrichtung nach einem der Ansprüche 6 bis 9, **dadurch gekennzeichnet, dass** dem Schmutzablass (9) eine Sammelkammer (20) für ausgefilterte Partikel vorgelagert ist.

11. Filtereinrichtung nach einem der Ansprüche 6 bis 10, **gekennzeichnet durch** wenigstens eine Lichtquelle, insbesondere UV-Lichtquelle (40).

12. Filtereinrichtung nach Anspruch 11, **dadurch gekennzeichnet, dass** die UV-Lichtquelle im Filterkerzeninnenraum angeordnet ist.

13. Filtereinrichtung nach einem der Ansprüche 6 bis 12, **dadurch gekennzeichnet, dass** das Gehäuse (1) oben mit einem lösbaren Deckel (17) verschlossen ist, der die Halteeinrichtung für alle im Filterkerzeninnenraum angeordnete Lichtquellen (40) bildet, wobei vorzugsweise mehrere Lichtquellen vorgesehen sind, zwischen denen Lochblechstreifen (22) angeordnet sind.

14. Filtereinrichtung nach einem der Ansprüche 6 bis 13, **dadurch gekennzeichnet, dass** ein Absperrorgan, insbesondere eine Schaltkugel (65), zum Öffnen oder Schließen der Luft- oder Gaszufuhr mechanisch mit den Absperrorganen für das Ablassventil (13) und das Auslassventil (12) oder deren Antrieb gekoppelt ist.

15. Filtereinrichtung nach einem der Ansprüche 6 bis 14, **dadurch gekennzeichnet, dass** die Filterkerzen (30) aus Spaltsiebkerzen mit einer Maschenweite von weniger als 0,15 mm (150 Microns), insbesondere weniger als 0,075 mm (75 Microns) besteht.

## Revendications

1. Procédé pour mettre en oeuvre un appareil de filtrage pour la filtration de liquides, en particulier d'eau ou d'eau potable, l'appareil de filtrage comprenant un logement (1) ayant une entrée (4) pour le liquide non filtré et une sortie de filtrat (7) pour le liquide filtré, la sortie pouvant être ouverte et fermée au moyen d'une vanne de sortie (12), un moyen formant filtre (31) agencé dans le logement dans le chemin d'écoulement du liquide entre l'entrée et la sortie de filtrat, et une décharge de saletés (9), les particules étant filtrées hors du liquide par le moyen formant filtre (31) et étant susceptibles d'être déchargées du logement via la décharge de saletés pouvant être ouverte et fermée au moyen d'une vanne de décharge (13), la vanne de décharge (13) et la vanne de sortie (12) sont actionnées en commun, afin, par l'ouverture de la vanne de décharge (13) et par la fermeture simultanée au moins partielle de la vanne de sortie (12), de produire une impulsion de pression dans le liquide filtré pour nettoyer le moyen formant filtre, **caractérisé en ce que** la commutation commune de la vanne de décharge et de la vanne de sortie (13, 12) a lieu avec l'entrée (4) étant au moins partiellement ouverte, dans lequel de l'air, en particulier des petites bulles d'air, ou un gaz est injecté, régulé, dans un espace intérieur de bougie filtrante (32) d'une bougie filtrante (30), dont la paroi circonférentielle est formée par le moyen formant filtre (31) et dont l'espace intérieur de bougie (32) est relié à la sortie de filtrat.

2. Procédé selon la revendication 1, **caractérisé en ce que** la vanne de décharge (13) et la vanne de sortie (12) sont couplées mécaniquement l'une à l'autre et sont actionnées au moyen d'une commande commune (16).

3. Procédé selon la revendication 1 ou 2, **caractérisé en ce que** la commutation commune de la vanne de décharge et de la vanne de sortie (13, 12) a lieu avec l'entrée (4) complètement ouverte.

4. Procédé selon l'une des revendications 1 à 3, **caractérisé en ce que** la commutation commune provoque une variation unique de la position de commutation d'un élément de coupure de la vanne de sortie {12) et d'un élément de coupure de la vanne de décharge (13), ou **en ce que**, pendant la commutation, leur position de commutation est variée plusieurs fois directement de manière successive, afin de donner naissance à une pulsation avec une pluralité d'impulsions de pression dans le liquide.

5. Procédé selon l'une des revendications 1 à 4, **caractérisé en ce que**, pendant l'ouverture de la vanne de décharge (13) et/ou de manière permanente, de l'air, de préférence de l'air comprimé, ou un gaz est injecté dans un espace intérieur de bougie filtrante (32), relié à la sortie de filtrat, d'une bougie filtrante (30), dont la paroi circonférentielle est formée par le moyen formant filtre (31), afin de produire dans l'espace intérieur de bougie filtrante un mélange air / eau turbulent inconstant dans le temps qui nettoie le moyen formant filtre en sens contraire du filtrage.

6. Appareil de filtrage pour la filtration de liquides, en particulier d'eau ou d'eau potable, avec un logement (1) ayant une entrée (4) pour le liquide non filtré et une sortie de filtrat (7) pour le liquide filtré, un moyen formant filtre (31) étant agencé dans le logement (1) dans le chemin d'écoulement du liquide entre l'entrée et la sortie de filtrat pour le filtrage de particules hors du liquide sur un côté saletés, et avec une décharge de saletés (9), via laquelle les particules filtrées sur le côté saletés peuvent être déchargées du logement, la sortie de filtrat (7) se voyant attribuer une vanne de sortie (12) et la décharge de saletés (9) se voyant attribuer une vanne de décharge (13), dans lesquelles la vanne de sortie {12) et la vanne de décharge (13) peuvent être actionnées par une commande commune (16), **caractérisé en ce que** la vanne de sortie (12) et la vanne de décharge (13) sont mécaniquement couplées d'une telle façon que la vanne de décharge (13) ouvre la décharge de saletés seulement lorsque la vanne de sortie (12), tandis que l'entrée (4) est au moins partiellement ouverte, a au moins partiellement coupé la sortie de filtrat (7), et **en ce que** le moyen formant filtre (31) forme la paroi circonférentielle d'une bougie filtrante (30), dont l'espace intérieur de bougie (32) est relié à la sortie de filtrat (7), et un dispositif d'alimentation en gaz {60, 61) est agencé au niveau de l'extrémité supérieure et/ou inférieure de la bougie filtrante (30) pour agir sur l'espace intérieur de bougie filtrante (32) avec de l'air ou du gaz, en particulier avec des bulles d'air ou des bulles de gaz.

7. Appareil de filtrage selon la revendication 6, **caractérisé en ce que** la vanne de décharge (13) et la vanne de sortie (12) ont toutes les deux une bille de vanne (11, 14) avec un alésage débouchant en tant qu'élément de coupure, dans lequel de préférence les deux billes de vanne (11, 14) sont reliées de manière fixe en termes de rotation l'une à l'autre via un arbre intermédiaire (15).

8. Appareil de filtrage selon la revendication 6 ou 7, **caractérisé en ce qu'**un espace annulaire (33) est formé, autour de la paroi circonférentielle de la bougie filtrante, dans le logement, le chemin d'écoulement débouchant, en aval de l'entrée (4), dans l'espace annulaire (33) de façon tangentielle.

9. Appareil de filtrage selon l'une quelconque des revendications 6 à 8, **caractérisé en ce que** l'entrée (4) débouche au niveau de l'extrémité de préférence supérieure dans l'espace annulaire (33), la décharge de saletés (9) étant reliée à l'autre extrémité, de préférence inférieure, de l'espace annulaire (33).

10. Appareil de filtrage selon l'une quelconque des revendications 6 à 9, **caractérisé en ce que** la décharge de saletés (9) est précédée par une chambre collectrice (20) pour les particules filtrées.

11. Appareil de filtrage selon l'une quelconque des revendications 6 à 10, **caractérisé par** au moins une source de lumière, en particulier Une source de lumière UV (40).

12. Appareil de filtrage selon la revendication 11, **caractérisé en ce que** la source de lumière UV est agencée dans l'espace intérieur de bougie filtrante.

13. Appareil de filtrage selon l'une quelconque des revendications 6 à 12, **caractérisé en ce que** le logement (1) est fermé en haut au moyen d'un couvercle amovible (17) qui forme le dispositif de maintien pour toutes les sources de lumière (40) agencées dans l'espace intérieur de bougie filtrante, de préférence une pluralité de sources de lumière étant prévues entre lesquelles des bandes de tôle perforées (22) sont agencées.

14. Appareil de filtrage selon l'une quelconque des revendications 6 à 13, **caractérisé en ce qu'**un élément de coupure, en particulier une bille de commutation (65), pour ouvrir ou fermer l'alimentation en air ou l'alimentation en gaz, est mécaniquement couplé aux éléments de coupure pour la vanne de décharge (13) et la vanne de sortie {12) ou leur commande.

15. Appareil de filtrage selon l'une quelconque des revendications 6 à 14, **caractérisé en ce que** les bougies filtrantes (30) consistent en bougies de criblage rainurées avec une largeur de maille inférieure à 0,15 mm (150 microns), en particulier moins de 0,075 mm (75 microns).
